# EUROPEAN PATENT SPECIFICATION

(11) **EP 1 067 476 B1**
(45) Date of publication and mention of the grant of the patent: **10.08.2011**
(21) Application number: 00305506.8
(22) Date of filing: 30.06.2000
(51) Int. Cl.: G06T 1/00

(54) **Information processing apparatus and method, and information distributing system**
Informationsverarbeitungsgerät und -verfahren und Informationsverteilungssystem
Appareil et méthode de traitement d'information et système de distribution d'information

(30) Priority: 08.07.1999 JP 19496099; 08.07.1999 JP 19496199
(43) Date of publication of application: 10.01.2001
(73) Proprietor: CANON KABUSHIKI KAISHA, Tokyo (JP)
(72) Inventor: Tagashira, Nobuhiro, Tokyo (JP); Iwamura, Keiichi, Tokyo (JP)
(74) Representative: Hitching, Peter Matthew

(56) References cited:
- EP-A- 0 903 736
- EP-A2- 0 903 943

## Description

### FIELD OF THE INVENTION

The present invention relates to an information processing apparatus and method, and an information distributing system and, more particularly, to an information processing apparatus and method, and an information distributing system, which process digital contents.

### BACKGROUND OF THE INVENTION

In recent years, improvement of optical fiber networks in trunk communication networks, prevalence of cable television systems, practical applications of satellite communications, prevalence of local area networks, and the like have drastically advanced, and these communication networks are interconnected positively. Using these communication networks, so-called digital contents including character data, sound data including voice, still image data, moving image data, computer programs, and the like are exchanged worldwide.

Digital contents have an easy-to-copy feature as that of digital information. Hence, digital contents suffer problems in terms of copyright protection.

As a technique for protecting copyrights, a technique called "digital watermarking" is known. Digital watermarking is a technique for embedding some information in digital information by executing a predetermined process for this digital information. For example, a method of embedding information in still image data can be classified into two methods, i.e., a method of embedding information in data of the spatial domain, and a method of embedding data in the frequency domain. As an example of the method of embedding information in data in the spatial domain, the IBM scheme based on patchworks (W. Bender, D. Gruhl, N. Morimoto, "Techniques for DATA Hiding", Proceedings of the SPIE, San Jose CA, USA, February 1995) is known.

Examples of the method of embedding information in data in the frequency domain include a scheme of National Defense Academy of Japan that uses the discrete Fourier transform (Onishi, Oka, and Matsui, "A Watermarking Scheme to Image Data by PN Sequence", SCIS '97-26B, January 1997), a scheme of Mitsubishi and Kyushu University (Ishizuka, Sakai, and Sakurai, "On an Experimental Evaluation of Steganography with Wavelet Transform", SCIS '97-26D, January 1997) and a scheme of Matsushita (Inoue, Miyazaki, Yamamoto, and Katsura, "A Digital Watermark Technique Based on Wavelet Transform and its Robustness on Image Compression and Transformation", SCIS '98-3.2.A, January 1998), the last two schemes of which use the discrete wavelet transform, and the like, are known in addition to a scheme of NTT that uses the discrete cosine transform (Nakamura, Ogawa, and Takashima, "A Method of Watermarking under Frequency Domain for Protecting Copyright of Digital Image", SCIS '97-26A, January 1997).

As a method of embedding information in sound data including voice, a method of embedding information in data in the frequency domain is known like the case of still image data. For example, a method that exploits the auditory characteristics of a human being in which when trigonometric functions having different periods are used as a group of basis functions, some basis functions are detected from a group of basis functions of linear sound data which is expressed by a linear combination of these functions, the phases of the detected functions are shifted somewhat, and sound data is restored using these functions, the difference from the original data cannot be perceived, a method which exploits the auditory characteristics in that loud sounds drown quiet sounds, i.e., in which information is embedded in wavelet coefficients obtained by computing the wavelet transform of digital sound data expressed as a linear real number function, and the like are known. Refer to Akira Inoue, "Digital Watermarking - Cryptosystem for Multimedia Era", Maruyama Gakugeitosho for details of these methods.

Methods of embedding information in moving image data include a method of embedding information in the MPEG format, and the like. MPEG uses an intra-frame encoding means that exploits the discrete cosine transform, and an inter-frame encoding means that makes the discrete cosine transform and variable-length encoding of inter-frame differences. Especially, image data with motions undergoes predictive encoding to express a moving object by motion vectors. The methods of embedding information in MPEG data include a method of embedding information in data in the frequency domain obtained by the discrete cosine transform, a method of embedding information in motion vectors, and the like.

Digital contents can be readily copied, and can also be readily altered and edited, since they are digital information, as described above. For example, a still image is altered or edited by cut, rotation, enlargement/reduction, color conversion, retouch, and the like. Also, in view of copying, hard copying to paper, copying of a hard copy, and the like may be done. Since digital watermarking is used to protect copyrights, even when digital information has been processed by alteration, edit, copy, and the like of digital contents, embedded information must be correctly detected. For this reason, the aforementioned information embedding methods are designed to have robustness or resilience high enough to correctly detect embedded information even when digital information has been processed.

As described above, digital watermarking provides robustness against processes such as alteration, edit, copy, and the like. However, when such processes are repeated, the robustness is limited if only the information embedding method is improved. For this reason, an information embedding method which has high robustness against repetitive processes, i.e., an information embedding method which can inherit embedded information even when processes are repeated, and can correctly detect that information, is demanded.

On the other hand, copyright information of digital contents is normally managed independently of digital contents, and a system for effectively managing the history of copyright information with respect to processes of digital contents is required. Likewise, history information with respect to processes of digital contents is often managed independently of digital contents, and a system for effectively managing process information of digital contents is demanded.

Also, a system that prevents forgery by managing identification information of a processing apparatus and the like as history information in the event of forgery attempts using digital processing devices is demanded.

EP-A- 0 903 943 discloses apparatus, for example a DVD apparatus, in which data to be played may contain a copy control watermark. Because the copy control watermark may not be detected properly if the aspect ratio of the image is changed, a position identifying watermark is embedded in the image in a preceding stage so that the apparatus can correctly detect any copy control watermark whatever aspect ratio the image has when played back.

EP0903736 teaches that electronic watermark information obtained by changing a luminance value of a luminance signal in a video signal and a copy generation management signal inserted into an area out of a scan region of the video signal are recorded into a recording medium. A reproducing apparatus comprises an electronic watermark information detecting circuit, a copy generation management signal detecting circuit, a control circuit to which detected electronic watermark information and copy generation management signal are supplied, and a video signal processing circuit controlled by an output of the control circuit.

### SUMMARY OF THE INVENTION

The present invention has been made to address one or more of the aforementioned problems, and has as its object to correctly inherit information embedded in digital contents.

An embodiment of the present invention discloses an information processing apparatus according to claim 1, an information processing method according to claim 3 and a computer program product according to claim 5.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

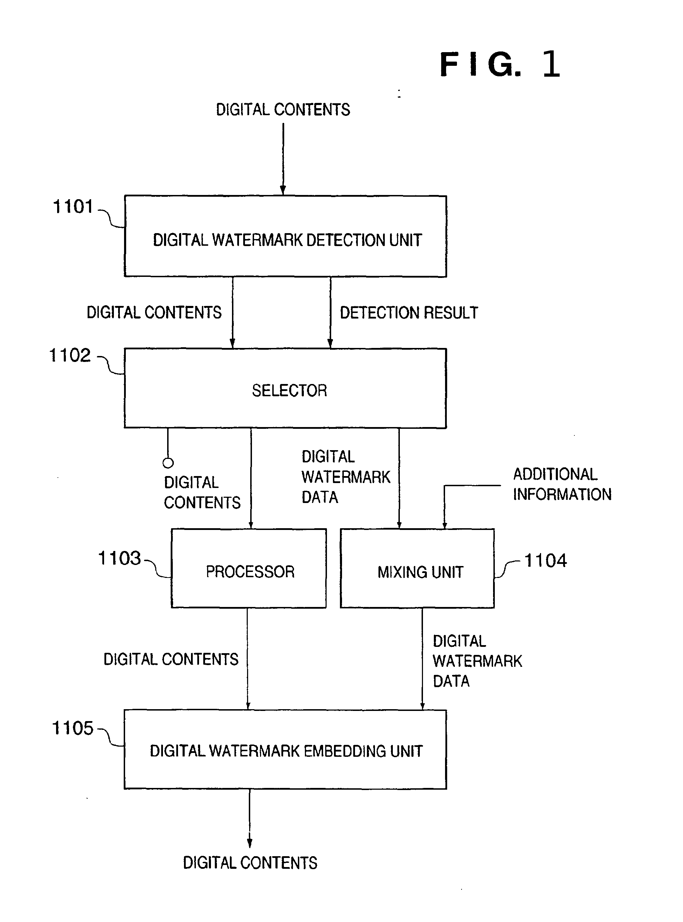

Fig. 1 is a block diagram showing the functional arrangement of an information processing system according to the embodiment of the present invention;

### DESCRIPTION OF THE PREFERRED EMBODIMENTS

An information processing system according to an embodiment of the present invention will be described in detail hereinafter with reference to the accompanying drawings. Note that digital contents in the following description include text formed by characters, sound including voice, a still image, a moving image, a computer program, and the like, and their data and databases. Embodiments of the functional arrangements that implement the present invention will be described below, but these arrangement can be implemented by either software or hardware. The present invention does not particularly limit the implement method of these arrangement.

### [First Embodiment]

Fig 1 is a block diagram showing the functional arrangement of the first embodiment. Referring to Fig. 1, reference numeral 1101 denotes a digital watermark detection unit; 1102, a selector; 1103, a processor; 1104, a mixing unit; and 1105 a digital watermark embedding unit.

The digital watermark detection unit 1101 detects digital watermark data from input digital contents, and outputs, as a detection result, information indicating whether or not digital watermark data is detected, and the digital watermark data if it is detected. Of course, the digital watermark detection unit 1101 outputs the input digital contents themselves.

Since the first embodiment does not relate to the detection method of digital watermark data, a detection method and a method of determining if digital watermark data is detected are not particularly limited. However, whether or not digital watermark data is detected can be determined by checking if digital watermark data unique to a system is detected, or if an ASCII character string or the like is detected.

The selector 1102 outputs the digital contents and digital watermark data input from the digital watermark detection unit 1101 when the detection result input from the digital watermark detection unit 1101 indicates that digital watermark data is detected. On the other hand, when the detection result indicates that no digital watermark data is detected, the selector 1102 outputs nothing.

The processor 1103 processes the digital contents input from the selector 1102, and outputs the processed digital contents to the digital watermark embedding unit 1105. Processing the digital contents means manipulating digital contents. For example, in case of a process for a still image, cut, rotation, enlargement/reduction, color conversion, retouch, copy, and the like may be done using retouch software or the like. Furthermore, hard copying of a still image, copying or scan using a scanner of an image hard copy, data compression, and the like are included in processes of the digital contents.

The mixing unit 1104 receives the digital watermark data from the selector 1102 and also additional information from a keyboard, a storage medium such as a hard disk, or an external apparatus such as a computer, mixes them, and outputs the mixed data as new digital watermark data. The data mixing method includes various methods such as a method of directly combining two data, a method of computing the difference between the two data, and combining the difference to one data, and the like.

The digital watermark embedding unit 1105 receives the digital contents from the processor 1103, and receives the digital watermark data from the mixing unit 1104. The digital watermark embedding unit 1105 embeds the input digital watermark data in the input digital contents by a predetermined method, and outputs the digital contents embedded with the digital watermark data.

In this manner, when digital watermark data is detected from the input digital contents, in other words, only when digital watermark data is embedded in the digital contents, a series of processes shown in Fig. 1 continue. On the other hand, in case of the digital contents in or from which digital watermark data is embedded or cannot be detected, a series of processes shown in Fig. 1 are canceled.

As described above, according to the first embodiment, whether digital watermark data is embedded or can be detected is checked before the processor 1103 that processes (manipulates) digital contents, and a series of processes shown in Fig. 1 continue or are canceled in accordance with this checking result. When a series of processes shown in Fig. 1 continue, information is added to the originally embedded digital watermark data, and new digital watermark data is inherited. Therefore, no digital contents that cannot inherit digital watermark data due to processes (manipulations) of these digital contents are output, and distribution of such digital contents can be prevented.

In the first, embodiment, information to be processed as digital watermark data is not particularly limited. For example, a case will be examine below wherein copyright information is processed as digital watermark data. According to this embodiment, a history of copyright information that pertains to digital contents processes can be managed. In other words, copyright information that pertains to a process for the digital contents can be added and inherited. Assume that only a copyright holder name is used as copyright information. When "Bob" processes (manipulates) digital contents, the copyright holder of which is "Alice", the mixing unit 1104 generates new copyright holder information "Alice, Bob" by adding copyright holder information "Bob", and the digital watermark embedding unit 1105 can embed digital watermark data including this new copyright holder information in the processed (manipulated) digital contents. Therefore, every time a process (manipulation) is done, copyright information can be added and inherited, and the history of copyright information can be managed.

The embodiment does not particularly limit the digital watermark data embedding method. However, since the digital watermark data embedding process is repeated, new digital watermark data may be overwritten on the already embedded digital watermark data, and overwrite of digital watermark data must be prevented. Hence, the digital watermark data embedding unit 1105 may embed digital watermark data at different positions in turn using an embedding method that designates the embedding positions of the digital watermark data, or may embed only additional information at different positions in turn.

When embedding robustness of digital watermark data is changed stepwise, optimization for a specific application such as prevention of image quality deterioration or the like can be achieved.

It is to be understood that the invention is not limited to the specific embodiment except as defined in the appended claims.

## Claims

1. An information processing apparatus comprising:
detection means (1101) for detecting copyright holder information, indicating a copyright holder of input digital contents, that may have been embedded in the input digital contents;
control means (1102) for receiving the digital contents and the detected copyright holder information from the detection means and outputting the received digital contents and the received copyright holder information if the embedded copyright holder information is detected by the detection means;
processing means (1103) for allowing a user to alter the digital contents received from the control means;
mixing means (1104) for mixing the copyright holder information received from the control means with copyright holder information indicating the user, to generate new copyright holder information indicating the copyright holder and the user; and
embedding means (1105) for embedding the new copyright holder information in the digital contents altered by the processing means.

2. The apparatus according to claim 1, wherein when the detection result indicates that no embedded copyright holder information is detected, said control means is configured not to output the received digital contents to said processing means.

3. An information processing method comprising the steps of:
detecting copyright holder information, indicating a copyright holder of input digital contents, that may have been embedded in the input digital contents;
outputting the digital contents and the copyright holder information if the embedded copyright holder information is detected in the detection step; allowing a user to alter the digital contents output in the outputting step;
mixing the copyright holder information with copyright holder information indicating the user, to generate new copyright holder information indicating the copyright holder and user; and
embedding the new copyright holder information in the altered digital contents.

4. The information processing method of claim 3, wherein when the detection result indicates that no embedded copyright holder information is detected, the digital contents are not output in the outputting step.

5. A computer program product stored on a computer readable medium comprising computer program code for an information processing method according to any of claims 3 and 4.

## Patentansprüche

1. Informationsverarbeitungsvorrichtung, umfassend:
eine Nachweiseinrichtung (1101) zum Nachweisen von einen Urheberrechtsinhaber von Eingangsdigitalinhalten angebender Urheberrechtsinhaberinformation, die in den Eingangsdigitalinhalten eingebettet worden sein kann;
eine Steuereinrichtung (1102) zum Empfangen der Digitalinhalte und der nachgewiesenen Urheberrechtsinhaberinformation von der Nachweiseinrichtung und zum Ausgeben der empfangenen Digitalinhalte und der empfangenen Urheberrechtsinhaberinformation, falls die eingebettete Urheberrechtsinhaberinformation durch die Nachweiseinrichtung nachgewiesen wurde;
eine Verarbeitungseinrichtung (1103), um es einem Nutzer zu erlauben, die von der Steuereinrichtung empfangenen Digitalinhalte zu ändern;
eine Mixeinrichtung (1104) zum Mixen der von der Steuereinrichtung empfangenen Urheberrechtsinhaberinformation mit einer den Nutzer angebenden Urheberrechtsinhaberinformation, um neue Urheberrechtsinhaberinformation zu erzeugen, welche den Urheberrechtsinhaber und den Nutzer angibt; und
eine Einbetteinrichtung (1105) zum Einbetten der neuen Urheberrechtsinhaberinformation in die durch die Verarbeitungseinrichtung geänderten Digitalinhalten.

2. Vorrichtung nach Anspruch 1, wobei die Steuereinrichtung konfiguriert ist, um die Eingangsdigitalinhalte nicht an die Verarbeitungseinrichtung auszugeben, wenn das Nachweisergebnis angibt, dass keine eingebettete Urheberrechtsinhaberinformation nachgewiesen wurde.

3. Informationsverarbeitungsverfahren, umfassend die Schritte:
Nachweisen von einen Urheberrechtsinhaber von Eingangsdigitalinhalten angebender Urheberrechtsinhaberinformation, die in den Eingangsdigitalinhalten eingebettet worden sein kann;
Ausgeben der Digitalinhalte und der Urheberrechtsinhaberinformation, falls die eingebettete Urheberrechtsinhaberinformation im Nachweisschritt nachgewiesen wurde;
Erlauben, dass ein Nutzer die im Ausgabeschritt ausgegebenen Digitalinhalte ändern kann;
Mixen der Urheberrechtsinhaberinformation mit Urheberrechtsinhaberinformation, die den Nutzer angibt, um neue Urheberrechtsinhaberinformation zu erzeugen, welche den Urheberrechtsinhaber und den Nutzer angibt; und
Einbetten der neuen Urheberrechtsinhaberinformation in den geänderten Digitalinhalten.

4. Verfahren nach Anspruch 3, wobei die Digitalinhalte im Ausgabeschritt nicht ausgegeben werden, wenn das Nachweisergebnis angibt, dass keine eingebettete Urheberrechtsinhaberinformation nachgewiesen wurde.

5. Auf einem computerlesbaren Medium gespeichertes Computerprogrammprodukt, das einen Computerprogrammcode für ein Informationsverarbeitungsverfahren nach einem der Ansprüche 3 und 4 umfasst.

## Revendications

1. Appareil de traitement d'informations comprenant :
un moyen de détection (1101) pour détecter une information de détenteur de droit d'auteur, indiquant un détenteur de droit d'auteur de contenus numériques d'entrée, qui peuvent avoir été intégrés aux contenus numériques d'entrée ;
un moyen de commande (1102) destiné à recevoir les contenus numériques et l'information détectée de détenteur de droit d'auteur en provenance du moyen de détection et à fournir en sortie les contenus numériques reçus et l'information de détenteur de droit d'auteur reçue si l'information de détenteur de droit d'auteur intégrée est détectée par le moyen de détection ;
un moyen de traitement (1103) destiné à permettre à un utilisateur d'altérer les contenus numériques reçus du moyen de commande ;
un moyen de mélange (1104) destiné à mélanger l'information de détenteur de droit d'auteur reçue du moyen de commande à l'information de détenteur de droit d'auteur indiquant l'utilisateur, afin de générer une nouvelle information de détenteur de droit d'auteur indiquant le détenteur du droit d'auteur et l'utilisateur ; et
un moyen d'intégration (1105) destiné à intégrer la nouvelle information de détenteur de droit d'auteur aux contenus numériques altérés par le moyen de traitement.

2. Appareil selon la revendication 1, dans lequel, lorsque le résultat de détection indique qu'aucune information de détenteur de droit d'auteur intégrée n'est détectée, ledit moyen de commande est configuré pour ne pas fournir en sortie les contenus numériques reçus audit moyen de traitement.

3. Procédé de traitement d'informations comprenant les étapes consistant à :
détecter une information de détenteur de droit d'auteur, indiquant un détenteur de droit d'auteur de contenus numériques d'entrée pouvant avoir été intégrée aux contenus numériques d'entrée ;
fournir en sortie les contenus numériques et l'information de détenteur de droit d'auteur si l'information de détenteur de droit d'auteur intégrée est détectée lors de l'étape de détection ;
permettre à l'utilisateur d'altérer les contenus numériques fournis dans l'étape de fourniture en sortie ;
mélanger l'information de détenteur de droit d'auteur à une information de détenteur de droit d'auteur indiquant l'utilisateur, afin de générer une nouvelle information de détenteur de droit d'auteur indiquant le détenteur et l'utilisateur du droit d'auteur ; et
intégrer la nouvelle information de détenteur de droit d'auteur aux contenus numériques altérés.

4. Procédé de traitement d'informations selon la revendication 3, dans lequel, lorsque le résultat de détection indique qu'aucune information de détenteur de droit d'auteur intégrée n'est détectée, les contenus numériques ne sont pas fournis en sortie lors de l'étape de fourniture en sortie.

5. Produit à base de programme informatique stocké sur un support lisible par ordinateur comprenant un code de programme informatique destiné à un procédé de traitement d'informations selon l'une quelconque des revendications 3 et 4.
